# EUROPEAN PATENT APPLICATION

(11) **EP 4 185 028 A1**
(43) Date of publication of application: **24.05.2023**
(21) Application number: 21896918.6
(22) Date of filing: 22.11.2021
(51) Int. Cl.: H04W 64/00

(54) **LOCATION INFORMATION PROCESSING, REPORTING METHOD, BASE STATION DEVICE AND COMPUTER STORAGE MEDIUM**

(30) Priority: 25.11.2020 CN 202011336710
(71) Applicant: ZTE Corporation, Shenzhen, Guangdong 518057 (CN)
(72) Inventor: SUN, Yawen, Shenzhen, Guangdong 518057 (CN)
(74) Representative: Zoli, Filippo
(86) International application number: PCT/CN2021/132127
(87) International publication number: WO 2022/111417

(57) **Abstract**

A location information processing method, a reporting method, a base station device, and a computer storage medium. The location information processing method comprises: acquiring first location relationship information (S101), the first location relationship information being location relationship information reported by a source side base station to a mobility management network element for the last time; and sending the first location relationship information to a target side base station, so that the target side base station decides according to the received first location relationship information whether to report second location relationship information to the mobility management network element (S 102), wherein the second location relationship information is location relationship information acquired by a target terminal for the first time after switching to the target side base station, and the location relationship information is a relationship between the terminal location of the target terminal and a area of interest of a core network.

## Description

### CROSS-REFERENCE TO RELATED APPLICATION

This application is filed on the basis of the Chinese patent application No. 202011336710.3 filed November 25, 2020, and claims priority of the Chinese patent application, the entire contents of which are incorporated herein by reference.

### TECHNICAL FIELD

The present disclosure relates to but is not limited to the field of wireless communication, in particular to but not limited to a method for processing location information, a method for reporting location information, a base station and a computer storage medium.

### BACKGROUND

In case that the access and mobility management function (AMF) has sent a location reporting request of User Equipment (UE) to the base station, and the carried type is "UE presence in the area of interest", then, when the UE context is migrated through an Xn interface (a network interface between nodes of 5G-Radio Access Network (NG-RAN )), the source base station will carry the location reporting information to the target base station through Location Reporting Information, the information element in XN RETRIEVE UE CONTEXT RESPONSE signaling (a signaling for retrieving the UE context response in the Xn interface) or XN HANDOVER REQUEST signaling (a signaling for handover request in the XN interface). The target base station determines whether the location relationship of the target UE relative to the area of interest of the core network is changed compared to the last reported relationship, and then determines whether to report the location information and the location relationship of the target UE relative to the area of interest of the core network to the AMF.

In some technical schemes, when the UE context is transferred through the Xn interface, the determination performed by the target base station on the location relationship of the location of the UE relative to the area of interest of the core network is complicated, and sometimes some unnecessary overhead for reporting is generated.

### SUMMARY

Some embodiments of the present disclosure provide a method for processing location information, a method for reporting location information, a base station and a computer storage medium, which are intended to alleviate at least one of the related technical problems, including the complicated determination on whether to report the location relationship of the target UE relative to the area of interest of the core network and the possible unnecessary overhead for the reporting, by the target base station, when the UE context is transferred through the Xn interface.

In view of this, an embodiment of the present disclosure provides a method for processing location information, which is performed by a source base station, the method includes, acquiring first location relationship information which is location relationship information last reported to an AMF by the source base station; sending the first location relationship information to a target base station, such that the target base station decides whether to report second location relationship information to the AMF according to the received first location relationship information; the second location relationship information is the location relationship information initially acquired after a target UE is handed to the target base station; and the location relationship information is the relationship between a location of the target UE and an area of interest of a core network.

An embodiment of the present disclosure further provides a method for reporting location information, which is performed by a target base station, the method includes, receiving first location relationship information sent by another apparatus, where the first location relationship information is location relationship information last reported to an access and mobility management function (AMF) by a source base station; reporting second location relationship information to the AMF, in response to the received first location relationship information and the second location relationship information meeting a predetermined condition, where, the second location relationship information is the location relationship information initially acquired after a target UE is handed to the target base station; and the location relationship information includes relationship between a location of the target UE and an area of interest of a core network.

An embodiment of the present disclosure further provides a base station which includes a processor, a memory and a communication bus, where the communication bus is configured to implement a connection and communication between the processor and the memory; and the processor is configured to execute at least one computer program stored in the memory which, when executed by the processor, causes the processor to carry out any one of the methods as described above.

An embodiment of the present disclosure further provides a computer-readable storage medium storing at least one computer program executable by at least one processor, which when executed by the processor, causes the processor to carry out any one of the methods as described above.

Other features and corresponding beneficial effects of the present disclosure are described in the latter part of the description, and it should be understood that at least part of the beneficial effects will become apparent from the description of the present disclosure.

### BRIEF DESCRIPTION OF DRAWINGS

FIG. 1 depicts a flowchart showing a method for processing location information according to Embodiment One of the present disclosure;
FIG. 2 depicts a flowchart showing a method for reporting location information according to Embodiment One of the present disclosure;
FIG. 3 depicts a timing chart showing a base station reporting the location of UE in the RRC-Inactive state according to Embodiment Two of the present disclosure; and
FIG. 4 depicts a schematic diagram showing a base station according to Embodiment Two of the present disclosure.

### DETAILED DESCRIPTION

The present disclosure will be described below through some embodiments in conjunction with the drawings, for illustration of the purpose, technical scheme and advantages of the present disclosure. It should be understood that the embodiments described here are illustrative but not limiting.

### EMBODIMENT ONE

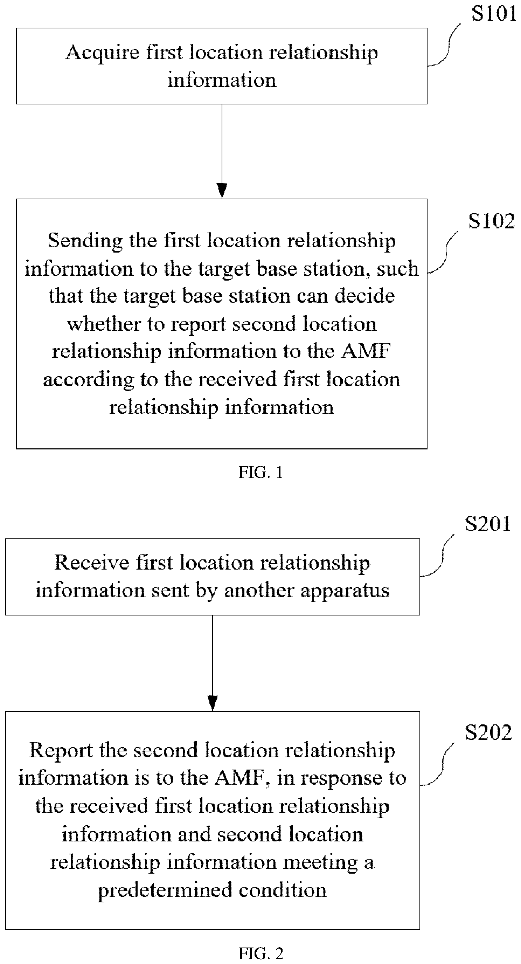

This embodiment provides a method for processing location information, which is performed by a source base station, in order to reduce the task for determination of the target base station on whether to report the relationship between the location of the UE and the area of interest of the core network and to reduce the corresponding overhead for the reporting when the UE context is transferred through the Xn interface. As shown in FIG. 1, the method includes the following.

At S 101, first location relationship information is acquired.

It should be noted that the first location relationship information is the last location relationship information reported by the source base station to the AMF.

At S 102, the first location relationship information is sent to the target base station, such that the target base station can decide whether to report second location relationship information to the AMF according to the received first location relationship information.

It should be noted that the second location relationship information is the location relationship information initially acquired after a UE is handed to the target base station.

The location relationship information includes the relationship between the location of the target UE and the area of interest of the core network. The target UE can be any terminal device whose UE context is migrated through the Xn interface. It can be understood that the method for processing location information in this embodiment is performed by the source base station. The source base station, once reporting the information to the AMF, can directly acquire the information, that is, the source base station can acquire the first location relationship information.

The UE context is transferred through the Xn interface during the process of, for example, but is not limited to, inter-station resume (that is, the UE starts the resume process to access another base station), inter-station Radio Access Network based notification Area Update (RNAU), or inter-station re-establishment. In case that the target base station performs a determination as to whether to report the location information to the AMF according to the relationship between the terminal location when the UE resides in the source base station and the area of interest of the core network after acquiring the UE context, the target base station can perform the determination simply through the first location information sent by means of the method described above, and no complicated logical determination is required. And the result of determination is accurate, failure in determination is avoided, thus reducing the number of times of reporting by the target base station to the AMF, which is beneficial to reducing the overhead for the reporting in some implementations.

In some embodiments, S 102 described above includes, appending a location relationship information element to the Xn interface, where the location relationship information element identifies the first location relationship information element, and sending the location relationship information element to the target base station. The location relationship information element can be transmitted through the interface, by appending the information element to the interface. Accordingly, the target base station should make corresponding adaptation to acquire the location relationship information element from the Xn interface, and learn the actual first location relationship information based on the location information element.

In some embodiments, sending the location relationship information element to the target base station includes, carrying the location relationship information element in the target signaling. It should be noted that the target signaling includes the signaling that the source base station sends to the target base station during the handover of the UE context. For example, the signaling includes but is not limited to, RETRIEVE UE CONTEXT RESPONSE signaling (a signaling for retrieving the UE context response) and/or HANDOVER REQUEST signaling (a signaling for handover request). The location relationship information element is brought to the target base station through these signaling, so as to facilitate the target base station to perform the determination after acquiring the UE context.

According to the method for processing location information according to an embodiment of the present disclosure, the first location relationship information is acquired and sent to the target base station, such that the target base station can decide whether to report the second location relationship information to the AMF according to the received first location relationship information. As such, the excessive consumption of the resources for the determination and unnecessary overhead for the reporting, resulting from the incapability of the target base station to accurately know the relationship between the location of the target UE and the area of interest of the core network, is reduced. Also, the determination logic of whether to report the relationship between the location of the UE and the area of interest of the core network when the UE context is handed through the Xn interface, is simplified, and unnecessary overhead for reporting and the consumption of resources and hardware capability are reduced in some implementations.

This embodiment further provides a method for reporting location information, which is performed by a target base station. As shown in Fig. 2, the method includes the following.

At S201, first location relationship information sent by another apparatus is received.

It should be noted that the first location relationship information is the last location relationship information reported by the source base station to the AMF.

It can be understood that the another apparatus in this operation is the apparatus including the source base stations, and the type of the another apparatus is not limited in this embodiment. As shown above, the apparatus can be the source base stations that is also a base station, and in other embodiments, the apparatus may be another network device.

At S202: the second location relationship information is reported to the AMF, in response to the received first location relationship information and second location relationship information meeting a predetermined condition.

It should be noted that the second location relationship information is the location relationship information initially acquired after a target UE is handed to the target base station.

The location relationship information includes the relationship between the location of the target UE and the area of interest of the core network. It can be understood that the method for processing location information set forth in this embodiment is performed by the target base station. The target base station can acquire the second location relationship information reported by the target base station.

It can be understood that, the target-side base station receives the first location relationship information sent by another apparatus, and thus can directly decide whether to report according to the first location relationship information, thus avoiding the situation that the relationship between the location of the UE and the area of interest of the core network is not accurately known, which leads to unnecessary reporting. It can be seen that the method for reporting location information in this embodiment can reduce unnecessary overhead for information reporting.

In some embodiments, the method for reporting location information further includes the following.

At S203, the second location relationship information is prevented from reporting to the AMF, in response to a failure of the received first location relationship information and second location relationship information in meeting the predetermined condition.

It can be understood that, in this embodiment, the first location relationship information that can be acquired by the target base station accurately reflects the relationship between the location of the UE and the area of interest of the core network, so as to ensure the correct decision as to whether the predetermined condition is met, and avoid failure in reporting or unnecessary reporting.

In some embodiments, the predetermined condition that the received first location relationship information and second location relationship information shall meet includes the following.

The second location relationship information is changed compared with the first location relationship information. That is, the second location relationship information is reported to the AMF if the second location relationship information is changed compared to the first location relationship information. In another saying, if it is determined that the relationship between the location of the target UE and the area of interest of the core network has changed (the last location report by the source base station is different from that initially acquired by the target base station), the target base station reports the relationship between the location of the target UE and the area of interest of the core network to the AMF, so that the AMF can know the change of the relationship between the location of the UE and the area of interest of the core network.

In some embodiments, the relationship between the location of the UE and the area of interest of the core network includes, but is not limited to the following:
- The location of the UE is within the area of interest of the core network.
- The location of the UE is not within the area of interest of the core network.
- It is not possible to determine whether the location of the UE is within the area of interest of the core network.

In some implementations, the base station can accurately compare the location of the UE with the area of interest of the core network, and perform a determination as to whether the location of the UE is within the area of interest of the core network, when the location of the UE acquired by the base station is an exact location. In some implementations, the location of the UE acquired by the base station is a range. For example, the UE can move in the Radio Access Network Based Notification Area (RNA) when the UE is in Radio Resource Control (RRC) Inactive state, without notifying the NG-RAN. It may be not possible to determine whether the location of the UE is within the area of interest of the core network based on the possible range of the location of the UE. In particular, in case that the area of interest of the core network does not completely cover the range of the location of the UE, the location of the UE may or may not be within the area of interest of the core network, so it is not possible to determine whether the location of the UE is within the area of interest of the core network. In contrast, in case that the area of interest of the core network completely covers the range of the location of the UE, or the range of the location of the UE is completely not within the area of interest of the core network, it can be determined that, the location of the UE is within the area of interest of the core network, or the location of the UE is not within the area of interest of the core network.

In these embodiments, regardless of the relationship between the location of the UE and the area of interest of the core network, as long as the first location relationship information is different from the second location relationship information (that is, the relationship between the location of the target UE and the area of interest of the core network has changed), the target base station reports the relationship between the location of the target UE and the area of interest of the core network to the AMF.

In some embodiments, reporting the relationship between the current location of the UE and the area of interest of the core network to the AMF includes reporting the relationship between the current location of the UE and the area of interest of the core network to the AMF through the signaling of the N2 interface. As an example, the relationship between the location of the UE and the area of interest of the core network can be reported to the AMF through the LOCATION REPORT signaling (signaling for location report) of the N2 interface (the network interface between the access network and the AMF). According to the above description of this embodiment, the N2 interface does not generate unnecessary signaling overhead.

According to the method for reporting location information according to various embodiments of the present disclosure, the first location relationship information sent by another apparatus is received, and a determination as to whether to report the second location relationship information to the AMF is performed according to the received first location relationship information. As such, the excessive consumption of the resources for the determination and unnecessary overhead for the reporting, resulting from the incapability of the target base station to accurately know the relationship between the location of the target UE and the area of interest of the core network, is reduced. Also, the determination logic of whether to report the relationship between the location of the UE and the area of interest of the core network when the UE context is handed through the Xn interface, is simplified, and unnecessary overhead for reporting and the consumption of resources and hardware capability are reduced in some implementations.

### EMBODIMENT TWO

The processing and reporting procedure of the location information, and the location relationship of the location of the UE relative to the area of interest of the core network in some technical schemes are illustrated first in this embodiment, in order to facilitate the understanding of the method for processing location information method and the method for reporting location information according to an embodiment of the present disclosure. In some technical schemes, the source base station carries the location reporting information to the target base station in some cases. For example, the AMF has once sent a location reporting request of the UE to the base station, and the carried type is "UE presence in the area of interest", then when the UE context is migrated through the Xn interface, the source base station carries the location reporting information to the target base station through the Location Reporting Information in the signaling of the XN RETRIEVE UE CONTEXT RESPONSE.

In some technical schemes, the source base station will not inform the target base station of the latest reported location relationship of the UE relative to the area of interest of the core network. And thus, the target base station performs the determination based on the relevant information acquirable from the source base station independently. In some technical schemes, the procedure for the target base station to determine the location relationship of the latest location of the UE reported by the source base station relative to the area of interest of the core network can include the following cases.

Case 1: The area of interest of the core network only covers the area in the Tracking Area Identity List (TAI List). In this case, the target base station can independently determine the location relationship of the latest location of the UE reported by the source base station relative to the area of interest of the core network.

Case 2: The area of interest of the core network covers the areas in the TAI List, and in the NG-Radio Access Network Cell Global Identity List (NG-RAN CGI List) or the Global RAN Node ID List. In this case, the target base station determines the relationship between the tracking area identifier of the UE at the source base station and the tracking area identifier list of the core network. If the target base station determines that the tracking area identifier of the UE at the source base station is in the tracking area identifier list of the core network, it is indicated that the location of the UE when the UE resides at the source base station is within the area of interest of the core network. Otherwise, it is not possible for the target base station to determine the location relationship of the UE when the UE resides at the source base station, relative to the area of interest of the core network.

Case 3: The area of interest of the core network only covers the areas in the NG-RAN CGI List or the Global RAN Node ID List. In that case, it is completely not possible for the target base station to determine the location relationship of the UE when the UE resides at the source base station, relative to the area of interest of the core network.

In some technical schemes, when the location relationship of the UE relative to the area of interest of the core network changes, the target base station reports the relevant information of the location of the UE (usually through the signaling LOCATION REPORT of the N2 interface) to the AMF (at the core network side). It can be understood that no report is necessary if no change is made.

The target base station, when encountering the various situations which include but are not limited to those as described above, if fails to independently determine whether the location relationship of the current location of the UE relative to the area of interest of the core network has changed, compared with the latest reported location relationship from the source base station, the target base station can only report signaling LOCATION REPORT of the N2 interface to the core network to avoid underreporting. It can be seen that in some technical solutions, the target base station has to carry out a complicated determination, in order to avoid the underreporting of the information related to the location of the UE (including the relationship between the location of the UE and the area of interest of the core network). And the target base station can only directly report the information related to the location of the UE when independent determination by the target base station fails. In some cases (for example, the location relationship between the location of the UE and the area of interest of the core network is actually changed, but the target base station fails to determine whether the relationship changes independently), unnecessary overhead of the N2 signaling is generated.

The method for processing location information and the method for reporting location information according to this embodiment of the present disclosure will be further illustrated with an implementation below.

In this embodiment, a location relationship information element is appended to the Xn interface. As an example, in this embodiment, the location relationship information element is named UE Presence, and in this example, the UE Presence information element is included in the Area of Interest Information, as shown in Table 1 below. Shown in Table 1 are the details of the Area of Interest Information in this example (in this example, UE Presence information element is initially added), in which the UE Presence information element is the type of enumeration, and the values can take "in", "out", and "unknown", which respectively correspond to the cases that the location of the UE is within the area of interest of the core network, the location of the UE is not within (out of) the area of interest of the core network, and it is not possible to determine whether the location of the UE is within the area of interest of the core network.

**Table 1**

| IE/Group Name (information element name) | Presence (presentation) | Range (value range) | IE type and reference (information element type) | Semantics description (description ) |
|---|---|---|---|---|
| Area of Interest Item | | 1.. <maxnoofAoIs> | | |
| >List of TAIs in Area of Interest | | 0..1 | | |
| >>TAI in Area of Interest Item | | 1..< maxnoofTAIsinAo I > | | |
| >>>PLMN Identity | M (required) | | 9.2.2.4 | |
| >>>TAC | M | | 9.2.2.5 | |
| >List of Cells in Area of Interest | | 0..1 | | This IE may need to be refined with SA2. |
| > >Cell Item | | 1..<maxnoofcellsinAoI > | | |
| >>>PLMN Identity | M | | 9.2.2.4 | |
| >>>NG-RAN Cell Identity | M | | 9.2.2.9 | |
| >List of Global NG-RAN Nodes in Area of Interest | | 0..1 | | |
| > > Global NG-RAN Node in Area of Interest Item | | 1..<maxnoofRANNode sinAoI> | | |
| >>>Global NG-RAN Node ID | M | | 9.2.2.3 | |
| >Request Reporting Reference ID | M | | 9.2.3.58 | |
| >UE Presence | M | | ENUMERATE D (in, out, unknown, ...) (enumeration type, values can include "in", "out", and "unknown") | |

When the UE context is migrated through the Xn interface, the method for processing location information performed by the source base station includes the following.

At S301, first location relationship information is acquired.

At S302, the first location relationship information is identified with a location relationship information element that is carried through target signaling.

The target signaling includes the signaling that the source base station sends to the target base station during the handover of the UE context, such as but not limited to RETRIEVE UE CONTEXT RESPONSE signaling and/or HANDOVER REQUEST signaling.

As an example, the source base station finally sends the UE Presence information element to the target base station through the RETRIEVE UE CONTEXT RESPONSE signaling and/or the HANDOVER REQUEST signaling. Specifically, the above-mentioned Area of Interest Information, the information element, is included in Location Reporting Information, the information element of the RETRIEVE UE CONTEXT RESPONSE signaling or the HANDOVER REQUEST signaling. If the location reporting type is "report UE moving presence in or out of the Area of interest", the relationship between the location of the target UE last reported by the source base station to the AMF and the area of interest of the core network can be carried in the UE Presence information element, so that the target base station can know the relationship.

The method for reporting location information performed by the target base station includes the following.

At S401, first location relationship information sent by a source base station is received.

In this example, the first location relationship information is identified by the UE Presence information element and sent to the target base station, such that the target base station can know the first location relationship information from the value of the UE Presence information element, i.e., the relationship between the location of the target UE last reported by the source base station to the AMF and the area of interest of the core network.

At S402, second location relationship information is reported through the LOCATION REPORT signaling of the N2 interface, in response to a determination that the second location relationship information is changed compared to the first location relationship information.

The second location relationship information includes the relationship between the location of the target UE which is initially acquired after the UE is handed to the target base station, and the area of interest of the core network.

The second location relationship information is prevented from being reported, in response to a determination that the second location relationship information is the same as the first location relationship information, that is, no change occurs.

It can be understood that if the current target base station (which becomes the new source base station of the UE after the handover) migrates the UE context to the subsequent target base station during the subsequent operating process, the current target base station can also perform the method for processing location information, as the source base station. It can be seen that the method for processing location information and the method for reporting location information in some embodiments of the present disclosure can be performed by the same apparatus according to the practical situation.

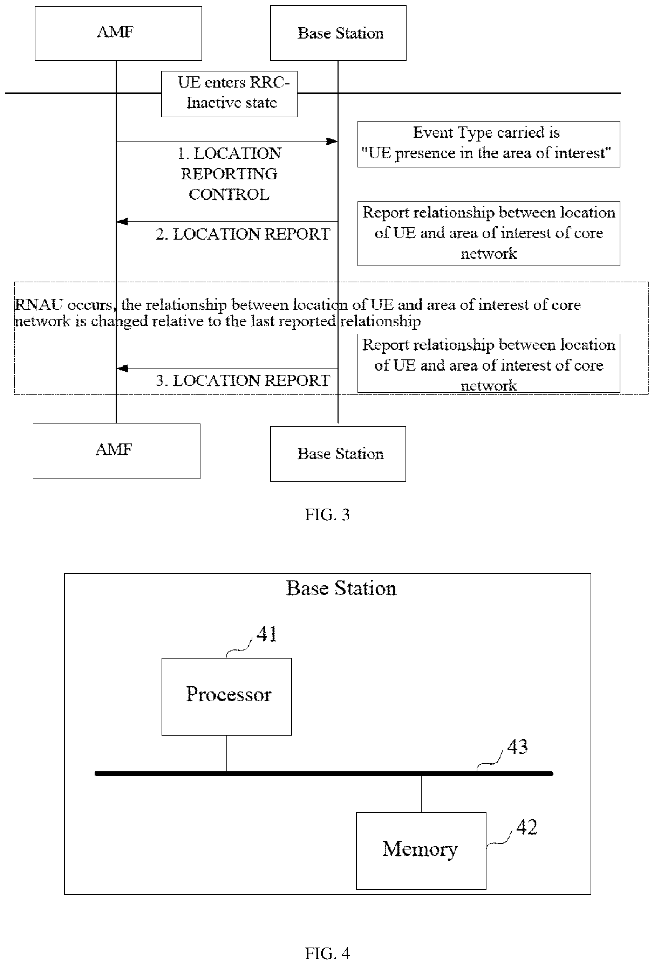

Referring to FIG. 3, which shows a timing chart for the base station to report the location of the UE in the RRC-Inactive state.

In case that the UE, when being in the RRC-Inactive state, receives the LOCATION REPORTING CONTROL signaling of the N2 interface sent by the core network, and the Event Type carried in signaling is "UE presence in the area of interest", the Radio Access Network (RAN) determines and reports the relationship between the RAN where the terminal resides and the area of interest of the core network. When RNAU of the UE occurs, the RAN determines the relationship between the location of the UE and the area of interest of the core network, and reports the relationship if the relationship is different from the latest report. In another example, during the procedure including but not limited to inter-station Resume or inter-station re-establishment, the corresponding determination can also be performed, and the relationship is reported when it is determined that the relationship between the location of the UE and the area of interest of the core network is changed.

In some technical schemes, when the inter-station Resume or inter-station RNAU of the UE occurs, it is not possible for the target base station to know whether the last location information reported by the source base station to the AMF is based on RNA or through accurate location information. And thus, it is necessary for the target base station to perform a complicated logical determination, and the location information may not be determined. In contrast, according to this embodiment of the present disclosure, the target base station can directly acquire the location relationship information last reported by the source base station to the AMF, without knowing the other processes experienced by the source base station. And it is merely necessary for the target base station to compare the acquired second location relationship information with the received first location relationship information.

It can be seen from this embodiment that, it is only necessary for the target base station to compare the relationship between the location of the UE when the UE resides at the target base station and the area of interest of the core network, with the result last reported to the AMF (that is, the relationship between the location of the target UE and the area of interest of the core network last reported by the source base station), so as to determine whether it is necessary to report the relationship between the location of the UE and the area of interest of the core network. The logic of determination is simplified, and unnecessary overhead for the reporting is eliminated (e.g., the overhead for signaling LOCATION REPORT of the N2 interface is eliminated in this example).

### EMBODIMENT THREE

An embodiment further provides a base station. As shown in FIG. 4, the base station includes a processor 41, a memory 42 and a communication bus 43.

The communication bus 43 is configured to implement the connection and communication between the processor 41 and the memory 42.

The processor 41 is configured to execute one or more computer programs stored in the memory 42 to carry out the method for processing location information as described in Embodiment One or Two, and/or to carry out the method for reporting location information as described in Embodiment One or Two.

An embodiment further provides a computer storage medium, which includes a volatile or nonvolatile, removable or non-removable medium implemented in any method or technology for storing information, such as computer-readable instructions, data structures, computer program modules or other data. Computer-readable storage media include, but are not limited to, RAM(Random Access Memory), ROM(Read-Only Memory), EEPROM (Electrically Erasable Programmable Read-Only Memory), Erasable programmable read-only memory), flash memory or other memory technologies, CD-ROM (Compact Disc Read-Only Memory), digital versatile disc (DVD) or other optical disc storage, magnetic box, magnetic tape, magnetic disc storage or other magnetic storage devices, or any other medium that can be used to store desired information and can be accessed by a computer.

The computer storage medium in this embodiment can be configured to store one or more computer programs, and the stored one or more computer programs can be executed by a processor to carry out the method for processing location information as described in Embodiment One or Two, and/or to carry out the method for reporting location information as described in Embodiment One or Two.

It is dynamic as to whether a base station is a source base station or a target base station. For a target UE, the serving base station of the UE is the source base station, and the base station to be handed over is the target base station. When the handover is completed, the target base station during the handover now becomes the current source base station. Therefore, it can be understood that after the computer program stored in the computer storage medium in an embodiment of the present disclosure is executed, the method for processing location information or the method for reporting location information according to an embodiment of the present disclosure can be carried out.

According to the method for processing location information and method for location information, the base station and the computer storage medium according to some embodiments of the present disclosure, first location relationship information is acquired, which is location relationship information last reported to an access and mobility management function (AMF) by the source base station; the first location relationship information is sent to a target base station, such that the target base station decides whether to report second location relationship information to the AMF according to the received first location relationship information; where the second location relationship information is the location relationship information initially acquired after a target UE is handed to the target base station; and the location relationship information is the relationship between a location of the target UE and an area of interest of a core network. Thereby, the technical effects include but are not limited to, the simplification of the logic for determination by the target base station to determine whether to report the location relationship information after the UE context migration, and the reduction of the overhead for the reporting, are achieved.

It shall be appreciated by a person having ordinary skills in the art that all or some of the steps, systems and functional modules/units in the methods disclosed above can be implemented as software (which can be implemented by computer program codes executable by computing devices), firmware, hardware and appropriate combinations thereof. In the hardware implementation, the division between functional modules/units mentioned in the above description does not necessarily correspond to the division of physical components. For example, a physical component can have multiple functions, or a function or step can be performed by several physical components in cooperation. Some or all physical components can be implemented as software executed by a processor, such as a central processing unit, a digital signal processor or a microprocessor, or as hardware, or as an integrated circuit, such as an application-specific integrated circuit.

Furthermore, it is well known to a person having ordinary skills in the art that communication media usually contain computer-readable instructions, data structures, computer program modules or other data in modulated data signals such as carrier waves or other transmission mechanisms, and can include any information delivery media. Therefore, the present disclosure is not limited to any specific combination of hardware and software.

The above content is a description of some embodiments of the present disclosure. However, the present disclosure is not limited thereto. For a person having ordinary skills in the art to which the present disclosure belongs, various simple deductions or alternations can be made without departing from the concept of the present disclosure, all of which should be regarded as falling within the scope of the present disclosure.

## Claims

1. A method for processing location information, which is performed by a source base station, comprising,
acquiring first location relationship information which is location relationship information last reported to an access and mobility management function (AMF) by the source base station;
sending the first location relationship information to a target base station, such that the target base station decides whether to report second location relationship information to the AMF according to the received first location relationship information; wherein, the second location relationship information is the location relationship information initially acquired after a target user equipment (UE) is handed to the target base station; and
wherein, the location relationship information is the relationship between a location of the target UE and an area of interest of a core network.

2. The method of claim 1, wherein, sending the first location relationship information to a target base station comprises,
appending a location relationship information element identifying the first location relationship information into an Xn interface; and
sending the location relationship information element to the target base station.

3. The method of claim 2, wherein, sending the location relationship information element to the target base station comprises,
carrying the location relationship information element in target signaling comprising signaling that is to be sent to the target base station during a handover of UE context of the target UE.

4. A method for reporting location information, which is performed by a target base station, comprising,
receiving first location relationship information sent by another apparatus, wherein the first location relationship information is location relationship information last reported to an access and mobility management function (AMF) by a source base station;
reporting second location relationship information to the AMF, in response to the received first location relationship information and the second location relationship information meeting a predetermined condition, wherein, the second location relationship information is the location relationship information initially acquired after a target user equipment (UE) is handed to the target base station; and
the location relationship information comprises relationship between a location of the target UE and an area of interest of a core network.

5. The method of claim 4, further comprising,
inhibiting the second location relationship information from being reported to the AMF, in response to the received first location relationship information and the second location relationship information failing to meet the predetermined condition.

6. The method of claim 4, wherein, the received first location relationship information and the second location relationship information meeting a predetermined condition comprises,
the second location relationship information is changed compared with the first location relationship information.

7. The method of claim 6, wherein, the relationship between the location of the target UE and the area of interest of the core network comprises one of,
the location of the target UE is within the area of interest of the core network;
the location of the target UE is not within the area of interest of the core network; or
whether the location of the target UE is within the area of interest of the core network is unknown.

8. The method of any one of claim 4 to claim 7, wherein, reporting second location relationship information to the AMF comprises,
reporting the second location relationship information to the AMF through signaling of the N2 interface.

9. A base station comprising a processor, a memory and a communication bus, wherein,
the communication bus is configured to implement a connection and communication between the processor and the memory; and
the processor is configured to execute at least one computer program stored in the memory which, when executed by the processor, causes the processor to carry out the method of any one of claim 1 to claim 3, and/or the method of any one of claim 4 to claim 8.

10. A computer-readable storage medium storing at least one computer program executable by at least one processor, which when executed by the processor, causes the processor to carry out the method of any one of claim 1 to claim 3, and/or the method of any one of claim 4 to claim 8.
